# FASCICULE DE BREVET EUROPEEN

(11) **EP 2 585 369 B1**
(45) Date de publication et mention de la délivrance du brevet: **30.10.2019**
(21) Numéro de dépôt: 11735511.5
(22) Date de dépôt: 16.06.2011
(51) Int. Cl.: B64C 27/00, B64F 5/00, G05B 17/02, G05B 9/02, G05B 23/02, G05B 19/042

(54) **SYSTÈME DE SIMULATION TEMPS RÉEL DE L'ENVIRONNEMENT D'UN MOTEUR D'AÉRONEF**
SYSTEM ZUR ECHTZEIT-SIMULATION DER UMGEBUNG EINES FLUGZEUGMOTORS
SYSTEM FOR REAL-TIME SIMULATION OF THE ENVIRONMENT OF AN AIRCRAFT ENGINE

(30) Priorité: 23.06.2010 FR 1055006
(43) Date de publication de la demande: 01.05.2013
(73) Titulaire: Safran Helicopter Engines, 64510 Bordes (FR)
(72) Inventeur: EVRA, Yannick, F-65270 Saint PE (FR); PY, Jean Michel, F-64800 Pardies Pietat (FR); RUPERT, Pascal, F-64140 Lons (FR)
(74) Mandataire: Delumeau, François Guy
(86) Numéro de dépôt international: PCT/FR2011/051378
(87) Numéro de publication internationale: WO 2011/161359

(56) Documents cités:
- EP-A1- 0 650 891
- WO-A1-2009/113867
- DE-A1- 10 131 317

## Description

### Arrière plan de l'invention

La présente invention se situe dans le domaine de la simulation d'un système temps réel complexe.

Elle s'applique plus particulièrement au domaine de la simulation de l'environnement d'un moteur embarqué dans un aéronef, par exemple un hélicoptère ou un avion.

D'une façon générale, un simulateur vise à reproduire un environnement.

Un tel simulateur est connu du document WO2009/113867A1.

Dans le domaine de l'aéronautique, des simulateurs sont utilisés notamment pour la mise au point ou le développement d'aéronefs nouveaux et pour l'entrainement des équipages.

Pour la simulation de systèmes temps réel complexes on connaît la méthode dite « hardware in the loop » qui consiste à coupler le calculateur de bord à un outil de simulation de l'environnement de ce calculateur apte à fournir au calculateur des données simulant un ou plusieurs capteurs de l'aéronef, les commandes générées par ce calculateur étant introduites en entrée de l'outil de simulation, ce dernier étant apte à réagir en fonction de ces commandes et à modifier les données d'entrée du calculateur.

La mise au point de ces systèmes de simulation nécessite le développement de cartes électroniques spécifiques pour générer des signaux analogiques associés à chacun des capteurs simulés, ceux-ci pouvant être de types différents : capteurs de température, de pression et de vitesse notamment.

La fabrication de ces cartes électroniques est couteuse et leur maintenance complexe pour éviter les problèmes de dérive notamment.

### Objet et résumé de l'invention

L'invention vise un système de simulation qui ne présente pas ces inconvénients.

Plus précisément l'invention concerne un système comportant au moins un calculateur numérique apte à contrôler un moteur dans un aéronef, chaque calculateur numérique comportant:
- au moins une entrée apte à recevoir une donnée représentative de l'état d'un capteur ;
- au moins une sortie reliée à au moins un actionneur; et
- un module de régulation apte à envoyer au moins une commande sur le bus de sortie vers l'actionneur précité en fonction des données reçues par ladite au moins une entrée.

Ce système comporte :
- un module de sélection, embarqué dans ledit calculateur numérique, apte à aiguiller ladite entrée soit vers le capteur soit vers un bus de substitution en fonction d'une instruction d'un opérateur ;
- un simulateur temps réel d'au moins une partie de l'environnement du moteur et de l'aéronef, ce simulateur comportant :
   - une sortie numérique apte à envoyer au moins une donnée numérique de substitution sur le bus de substitution à destination de l'entrée du calculateur numérique ;
   - une entrée numérique connectée à ladite au moins une sortie du calculateur numérique et apte à recevoir la commande émise par le calculateur numérique, le simulateur temps réel étant conçu pour simuler la réaction du moteur et de l'aéronef à cette commande ; et
- un module de contrôle, embarqué dans ledit calculateur numérique, apte à mettre en œuvre une procédure de contrôle pour empêcher l'aiguillage de l'entrée du calculateur numérique vers le bus de substitution par le module de sélection lorsque l'aéronef est en vol.

Dans ce document, un bus numérique désigne tout type de liaison physique sur laquelle peuvent transiter des données numériques ; par exemple les bus de type CAN, Ethernet ou ARINC sont des bus numériques utilisables dans l'invention.

Dans un mode particulier de réalisation, l'entrée numérique et la sortie numérique du simulateur temps réel peuvent être physiquement sur un même bus bidirectionnel.

Ainsi, et de façon très avantageuse, l'invention propose de coupler le calculateur numérique au simulateur par un bus numérique, plutôt que d'utiliser des cartes spécifiques pour simuler les différents capteurs.

Les données numériques émises sur ce bus et simulant les différents capteurs peuvent être multiplexées.

Conformément à l'invention, le module de sélection et le module de contrôle sont embarqués dans le calculateur numérique : ainsi le code utilisé en test, pendant la phase de simulation est strictement identique à celui embarqué dans l'aéronef en vol, seules les entrées et sorties du calculateur numérique étant détournées.

Conformément à l'invention, le système selon l'invention comporte des moyens de contrôle pour garantir que lorsque l'aéronef est en vol, les entrées du calculateur numérique sont interconnectées aux capteurs réels, Autrement dit, l'interconnexion des entrées du calculateur numérique avec le bus de substitution est impossible.

A cet effet, les moyens de contrôle du système selon l'invention apportent la sécurisation nécessaire pour garantir que la simulation ne peut être mise en oeuvre accidentellement lorsque l'aéronef est en fonctionnement.

D'une façon générale, grâce à l'invention, l'opérateur peut choisir en phase de simulation, pour chacun des capteurs, d'aiguiller les entrées du calculateur numérique, soit avec un capteur réel, soit avec un bus de substitution afin que des données numériques de substitution, générées par le simulateur temps réel, remplacent les données représentatives de l'état des capteurs.

Très avantageusement, le calculateur numérique transmet les commandes qu'il génère par les mêmes sorties, qu'il soit en mode simulation ou non.

Dans un mode préféré de réalisation de l'invention, le système selon l'invention comporte des moyens pour connecter ou déconnecter la sortie du calculateur numérique à l'entrée du module de régulation, la sortie du calculateur numérique étant en tout état de cause toujours reliée à l'actionneur.

Dans un mode préféré de réalisation de l'invention, le module de sélection est mis en œuvre par un module logiciel réalisant l'interface entre les entrées physiques du calculateur et le module de régulation.

Un tel module logiciel est connu de l'homme du métier sous le nom d'API (en anglais Application Program Interface).

Ce mode de réalisation est particulièrement avantageux, car il permet le développement du module de régulation et la certification du calculateur numérique indépendamment du simulateur temps réel.

Dans un mode préféré de réalisation de l'invention, le système comporte deux moteurs, chacun contrôlé par un calculateur numérique.

Cette caractéristique permet avantageusement de simuler le comportement des deux moteurs et de l'aéronef.

### Brève description des dessins

D'autres caractéristiques et avantages de la présente invention ressortiront de la description faite ci-dessous en référence aux dessins annexés qui en illustrent un exemple dépourvu de tout caractère limitatif.

Sur les dessins :
- la Figure 1 représente un système conforme à un premier mode de réalisation de l'invention, ce système comportant un seul moteur ;
- la Figure 2 représente schématiquement l'architecture logicielle du calculateur numérique du système de la Figure 1 ;
- la Figure 3 représente un deuxième système conforme à l'invention, ce système comportant deux moteurs ; et
- la Figure 4 représente sous forme d'organigramme les principales étapes d'une procédure de contrôle mises en œuvre dans les systèmes des Figures 1 et 3.

### Description détaillée d'un mode de réalisation

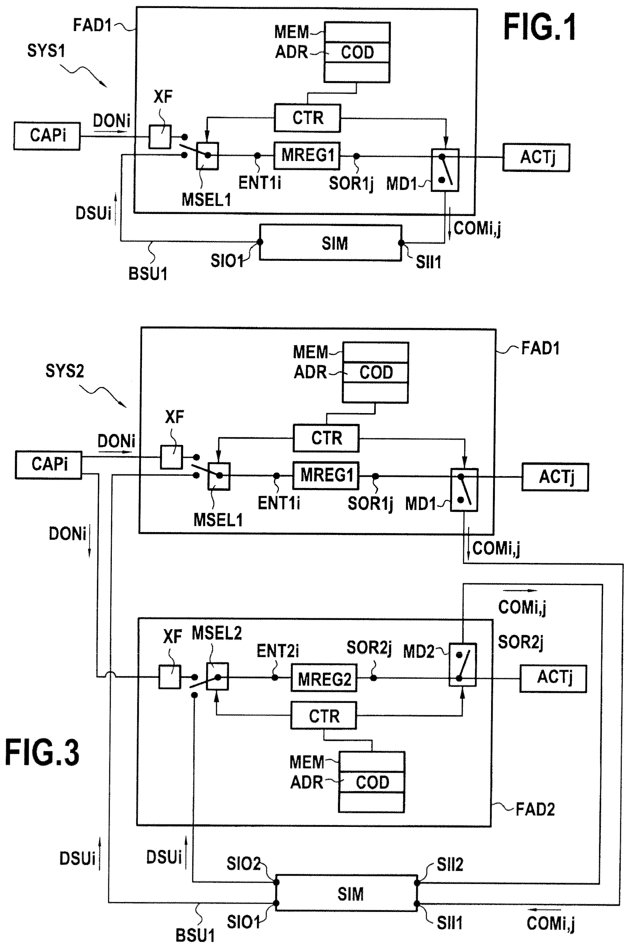

La **Figure 1** représente un système SYS1 conforme à l'invention.

Ce système comporte un calculateur numérique FAD1 apte à contrôler un moteur MOT1 dans un aéronef AER, cet aéronef et ce moteur n'étant pas représentés.

Ce calculateur FAD1 comporte une pluralité d'entrées ENT1ᵢ, seule une de ces entrées étant représentée sur la figure.

Chacune de ces entrées ENT1ᵢ est apte à recevoir une donnée numérique obtenue par transformation d'une donnée DONᵢ analogique représentative de l'état d'un capteur CAP1ᵢ du moteur MOT1 ou de l'aéronef AER.

Cette transformation est réalisée par un module de transformation XF comportant notamment un convertisseur analogique numérique.

Le calculateur numérique FAD1 comporte également une pluralité de sorties SOR1ⱼ, dont une seule est représentée sur la figure, chacune de ces sorties SOR1ⱼ étant reliée à un actionneur ACTⱼ du moteur MOT1 ou de l'aéronef AER.

Conformément à l'invention le système SYS1 comporte également un simulateur temps réel SIM apte à simuler au moins une partie de l'environnement du moteur MOT1 et de l'aéronef AER.

Ce simulateur SIM comporte une sortie SIO1 connectée à un bus BSU1 numérique dit de substitution.

Conformément à l'invention le système SYS1 comporte un module de sélection MSEL1 apte à aiguiller les différentes entrées ENT1ᵢ du calculateur numérique FAP1 soit vers les capteurs CAPᵢ soit vers le bus de substitution BSU1 relié au simulateur temps réel SIM.

L'aiguillage peut se faire indépendamment pour chacun des capteurs CAPᵢ.

Dans le mode de réalisation décrit ici, le calculateur numérique FAD1 comporte un contrôleur CTR apte à activer ou désactiver la liaison entre la sortie SOR1ⱼ et une entrée SII1 du simulateur numérique via un interrupteur MD1.

Dans l'exemple de réalisation décrit ici le module de sélection MSEL1 est contrôlé par les moyens de contrôle CTR sur instruction d'un opérateur.

Par conséquent, lors de la simulation, l'entrée ENT1ᵢ peut recevoir :
- soit une donnée DONᵢ représentative de l'état du capteur CAPᵢ ;
- soit une donnée numérique de substitution DSUᵢ générée par le simulateur temps réel SIM.

Le calculateur numérique FAD1 comporte un module de régulation MREG1 apte à envoyer, via une sortie SOR1ⱼ une commande COM_{i,j} à l'actionneur ACTⱼ en fonction de la donnée reçue sur l'entrée ENTᵢ, soit en provenance du capteur CAPᵢ (après conversion numérique de la donnée analogique DONᵢ) soit en provenance du simulateur SIM (donnée DSUᵢ).

La commande COMᵢⱼ est reçue par l'actionneur ACTⱼ.

Elle est aussi reçue en entrée SII1 du simulateur temps réel SIM si l'interrupteur MD1 est en position fermée.

Dans un mode d'utilisation de l'invention, l'opérateur peut ordonner au calculateur numérique FAD1 de ne tenir compte d'aucun capteur réel CAPᵢ. Les comptes-rendus de pannes associés à ces capteurs sont alors préférentiellement masqués.

Dans un tel mode de réalisation, le calculateur numérique FAD1 tente toujours d'actuer ses sorties mais aucune n'est connectée aux actionneurs ACTⱼ : les comptes-rendus de pannes associés peuvent être forcés à « correct ».

Les valeurs des commandes sont transmises à l'entrée SII1 du simulateur temps réel SIM.

Dans ce mode de réalisation, le simulateur temps réel intègre le modèle informatique du moteur MOT1, le modèle informatique de l'aéronef AER et éventuellement la prise en charge de l'avionique réelle mais celle-ci n'est pas simulée.

Dans un autre mode de réalisation, l'opérateur peut ordonner au calculateur numérique FAD1 de tenir compte de tous les capteurs CAPᵢ sauf un, seul le compte-rendu de pannes associé à ce capteur étant masqué.

Dans ce cas, le simulateur temps réel intègre au moins la simulation de ce capteur.

Le calculateur numérique actue ses sorties vers les actionneurs ACTⱼ avec succès, l'opérateur ayant indiqué que tous les actionneurs ACTⱼ étaient connectés : aucun compte-rendu de panne n'est masqué.

Dans le mode de réalisation de l'invention décrit ici, les valeurs des commandes COM_{i,j} émises vers les actionneurs sont transmises ou non au simulateur temps réel SIM suivant la position de l'interrupteur MD1. En phase de simulation, toutes les commandes sont transmises au simulateur temps réel SIM, ces commandes étant utilisées ou non par le simulateur.

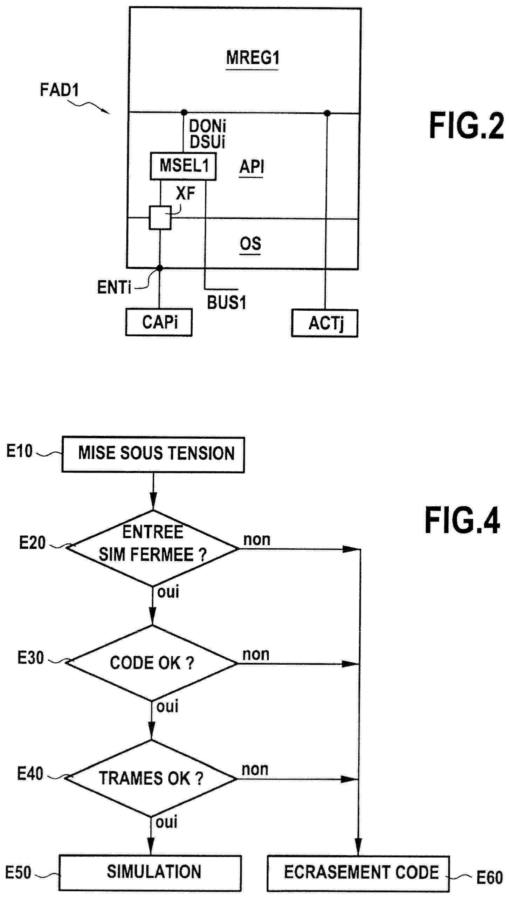

A la **Figure 2** on a représenté schématiquement les couches du logiciel mis en œuvre par le calculateur numérique FAD1. Il s'agit d'un modèle en trois couches à savoir, une couche basse OS comprenant le système d'exploitation gérant entre autres les différents capteurs CAPᵢ et les actionneurs ACTⱼ ; une couche haute MREG1 mettant en œuvre le module de régulation et apte à générer les commandes COM_{i,j} vers les actionneurs ACTⱼ en fonction des données reçues sur les entrées ENT1ᵢ, et une couche intermédiaire d'interface API entre le module de régulation MRG1 et le système d'exploitation OS dans lequel est implémenté le module de sélection MSEL1.

La **Figure 3** représente un système SYS2 conforme à l'invention, ce système comportant deux moteurs MOT1, MOT2 non représentés chacun étant contrôlé par un calculateur numérique FAD1, FAD2.

Des notations similaires sont utilisées pour le deuxième calculateur FAD2.

Ces calculateurs numériques FAD1 FAD2 sont interconnectés par une liaison intercalculateur LIF.

Dans le mode de réalisation décrit ici, le simulateur temps réel SIM intègre les modèles informatiques des deux moteurs MOT1 MOT2 et celui de l'aéronef AER.

Sur la Figure 3, le capteur CAPᵢ peut être connecté ou non à chacun des deux calculateurs numériques FAD1 FAD2 et chaque sortie SOR1ⱼ, SOR2ⱼ peut être connectée ou non à l'entrée SII1, SII2 du simulateur temps réel SIM.

Bien entendu, certains capteurs peuvent n'être connectés à un seul des deux calculateurs numériques FAD1, FAD2.

Conformément à l'invention, les calculateurs numériques FAD1, FAD2 sont strictement identiques pendant la phase de simulation et de mise au point des modules de régulation MREG1 MREG2, et pendant l'exploitation de l'aéronef, c'est-à-dire en vol.

Bien entendu, il est fondamental pour des raisons de sécurité que lorsque l'aéronef est en vol, la fonction de simulation ne puisse pas être activée.

Par conséquent, les moyens de contrôle CTR mettent en œuvre, dans chacun des calculateurs numériques FAD1 FAD2, une procédure de contrôle pour empêcher l'aiguillage des entrées ENT1ᵢ, ENT2ᵢ avec les bus de substitution BSU1 BSU2 lorsque l'aéronef AER est en vol.

La **Figure 4** représente un exemple de procédure de contrôle pouvant être mise en œuvre dans un système conforme à l'invention. Cette procédure de contrôle comporte, après la mise sous tension d'un calculateur FAD1, FAD2 (étape E10), une étape E20 au cours de laquelle on vérifie que l'entrée ENT1ᵢ, ENT2ᵢ, de ces calculateurs n'est pas reliée aux bus de substitution BSU1, BSU2 du simulateur temps réel SIM, autrement dit que ces entrées sont effectivement reliées aux capteurs CAPᵢ des moteurs ou de l'aéronef.

Si tel est le cas, l'étape E20 est suivie par l'étape E30 au cours de laquelle chacun des calculateurs numériques FAD1 FAD2 vérifie qu'une adresse déterminée ADR, d'une mémoire MEM comporte une valeur déterminée COD.

Si tel est le cas, cette étape E30 est suivie par une étape E40 au cours de laquelle chacun des calculateurs numériques FAD1, FAD2 attend une séquence de trame prédéterminée, dans un délai prédéterminé.

Si tel est le cas, c'est-à-dire si ces trois étapes de vérification E20, E30, E40 se déroulent avec succès, la simulation peut être envisagée, c'est-à-dire que l'opérateur peut effectivement connecter indépendamment chacune des entrées ENT1ᵢ, ENT2i soit à un capteur réel CAPᵢ soit au simulateur temps réel SIM1 via les bus de substitution BSU1, BSU2.

Dans le mode de réalisation décrit ici, si au moins l'une des étapes de vérification E20, E30, E40 échoue, le code COD à l'adresse ADR de la mémoire MEM est écrasé.

Cette procédure est exécutée à la mise sous tension du calculateur. Elle écarte toute activation intempestive du mode de simulation.

## Revendications

1. Système (SYS1, SYS2) comportant au moins un calculateur numérique (FAD1) apte à contrôler un moteur (MOT1) dans un aéronef (AER), chaque calculateur numérique (FAD1) comportant:
- au moins une entrée (ENT1ᵢ) apte à recevoir une donnée (DONᵢ) représentative de l'état d'un capteur (CAPᵢ);
- au moins une sortie (SOR1ⱼ) apte à être reliée à au moins un actionneur (ACTⱼ) ; et
- un module de régulation (MREG1) apte à envoyer au moins une commande (COM_{i,j}) via une dite sortie (SOR1ⱼ) vers ledit au moins un actionneur (ACTⱼ) en fonction d'une donnée (DONᵢ, DSUᵢ) reçue par ladite au moins une entrée (ENT1ᵢ);
ledit système (SYS) étant **caractérisé en ce qu'**il comporte :
- un module de sélection (MSEL1), embarqué dans ledit au moins un calculateur numérique (FAD1) apte à aiguiller ladite entrée (ENT1ᵢ) soit vers ledit capteur (CAPᵢ) soit vers un bus de substitution (BSU1) en fonction d'une instruction d'un opérateur ;
- un simulateur temps réel (SIM) d'au moins une partie de l'environnement dudit moteur (MOT1) et dudit aéronef (AER) comportant :
- une sortie numérique (SIO1) apte à envoyer au moins une donnée numérique de substitution (DSUᵢ) sur ledit bus de substitution (BSU) à destination de ladite entrée (ENTᵢ) dudit au moins un calculateur numérique (FAD1);
- une entrée numérique (SII1) connectée à ladite au moins une sortie (SOR1ⱼ) du calculateur numérique (FAD1) et apte à recevoir ladite au moins une commande (COM_{i,j}) émise par ledit au moins un calculateur numérique (FAD1), ledit simulateur temps réel (SIM) étant conçu pour simuler la réaction dudit moteur (MOT1) et dudit aéronef (AER) à ladite commande (COM_{i,j}) ; et
- un module de contrôle (CTR), embarqué dans ledit au moins un calculateur numérique (FAD1), apte à mettre en œuvre une procédure de contrôle pour empêcher ledit aiguillage de ladite au moins une entrée (ENT1ᵢ) du calculateur numérique (FAD1) vers ledit bus de substitution (BSU1) par ledit module de sélection (MSEL1) lorsque ledit aéronef est en vol.

2. Système (SYS1, SYS2) selon la revendication 1, **caractérisé en ce que** ledit module de sélection (MSEL) est mis en œuvre par un module logiciel réalisant interface entre ladite au moins une entrée (ENTᵢ) et ledit module de régulation (MREG).

3. Système (SYS1, SYS2) selon la revendication 1 ou 2 **caractérisé en ce qu'**il comporte des moyens (CTR, MD1ⱼ) pour connecter ou déconnecter ladite sortie (SORⱼ) connectée audit actionneur (ACTⱼ) à l'entrée (SII1) dudit simulateur.

4. Système (SYS2) selon l'une quelconque des revendications 1 à 3, **caractérisé en ce qu'**il comporte deux moteurs (MOT1, MOT2) et deux dits calculateurs numériques (FAD1, FAD2) interconnectés entre eux par une liaison physique (LIF), chacun desdits calculateurs (FAD1, FAD2) étant apte à contrôler un desdits moteurs.

5. Système (SYS1, SYS2) selon l'une quelconque des revendications 1 à 4 **caractérisé en ce que** ladite procédure de contrôle est mise en œuvre dès la mise sous tension (E10) dudit au moins un calculateur numérique (FAD1, FAD2), ledit module de contrôle étant apte à:
- vérifier (E20) que ladite entrée (ENT1ᵢ) est aiguillée vers ledit capteur (CAPᵢ);
- vérifier (E30) un code (COD) déterminé dans une adresse déterminée (ADR) d'une mémoire (MEM) dudit système (SYS1, SYS2);
- vérifier (E40) la réception d'au moins une trame déterminée dans un délai déterminé.

6. Système (SYS1, SYS2) selon la revendication 5, **caractérisé en ce que** ledit module de contrôle comporte des moyens pour écraser ledit code (COD) en cas d'échec d'au moins une desdites vérifications (E20, E30, E40).

## Patentansprüche

1. System (SYS1, SYS2), umfassend mindestens einen digitalen Computer (FAD1), der in der Lage ist, ein Triebwerk (MOT1) in einem Flugzeug (AER) zu steuern, wobei jeder digitale Computer (FAD1) umfasst:
- mindestens einen Eingang (ENT1ᵢ), der in der Lage ist, einen Datensatz (DONᵢ) zu empfangen, der den Zustand eines Sensors (CAPᵢ) darstellt,
- mindestens einen Ausgang (SOR1ⱼ), der in der Lage ist, mit mindestens einem Aktuator (ACTⱼ) verbunden zu werden, und
- ein Steuermodul (MREG1), das in der Lage ist, mindestens einen Befehl (COM_{i,j}) über einen der Ausgänge (SOR1ⱼ) an den mindestens einen Aktuator (ACTⱼ) in Abhängigkeit von einem Datensatz (DONᵢ, DSUᵢ) zu senden, der von dem mindestens einen Eingang (ENT1ᵢ) empfangen wurde,
wobei das System (SYS) **dadurch gekennzeichnet ist, dass** es umfasst:
- ein Auswahlmodul (MSEL1), das in den mindestens einen digitalen Computer (FAD1) eingebettet und in der Lage ist, den Eingang (ENT1ᵢ) entsprechend einer Anweisung eines Bedieners entweder zu dem Sensor (CAPᵢ) oder zu einem Substitutionsbus (BSU1) zu lenken,
- einen Echtzeitsimulator (SIM) von mindestens einem Teil der Umgebung des Triebwerks (MOT1) und des Flugzeugs (AER), umfassend:
- einen digitalen Ausgang (SIO1), der in der Lage ist, mindestens einen digitalen Substitutionsdatensatz (DSUᵢ) auf dem Substitutionsbus (BSU) an den Eingang (ENTᵢ) des mindestens einen digitalen Computers (FAD1) zu senden, und
- einen digitalen Eingang (SII1), der mit dem mindestens einen Ausgang (SOR1ⱼ) des digitalen Computers (FAD1) verbunden und dazu in der Lage ist, den mindestens einen Befehl (COM_{i, j}) zu empfangen, der von dem mindestens einen digitalen Computer (FAD1) übertragen wird, wobei der Echtzeitsimulator (SIM) dazu ausgelegt ist, die Reaktion des Triebwerks (MOT1) und des Flugzeugs (AER) auf den Befehl (COM_{i, j}) zu simulieren, und
- ein Steuermodul (CTR), das in den mindestens einen digitalen Computer (FAD1) eingebettet und in der Lage ist, ein Steuerverfahren durchzuführen, um das Umlenken des mindestens einen Eingangs (ENT1ᵢ) des digitalen Computers (FAD1) zu dem Substitutionsbus (BSU1) durch das Auswahlmodul (MSEL1) zu verhindern, wenn das Flugzeug sich im Flug befindet.

2. System (SYS1, SYS2) nach Anspruch 1, **dadurch gekennzeichnet, dass** das Auswahlmodul (MSEL) durch ein Softwaremodul umgesetzt ist, das eine Schnittstelle zwischen dem mindestens einen Eingang (ENTᵢ) und dem Steuermodul (MREG) bildet.

3. System (SYS1, SYS2) nach Anspruch 1 oder 2, **dadurch gekennzeichnet, dass** es Mittel (CTR, MD1ⱼ) zum Verbinden oder Trennen des mit dem Aktuator (ACTⱼ) verbundenen Ausgangs (SORⱼ) am Eingang (SII1) des Simulators umfasst.

4. System (SYS2) nach einem der Ansprüche 1 bis 3, **dadurch gekennzeichnet, dass** es zwei Triebwerke (MOT1, MOT2) und zwei der digitalen Computer (FAD1, FAD2) umfasst, die durch eine physikalische Verbindung (LIF) miteinander verbunden sind, wobei jeder der Computer (FAD1, FAD2) eines der Triebwerke steuern kann.

5. System (SYS1, SYS2) nach einem der Ansprüche 1 bis 4, **dadurch gekennzeichnet, dass** das Steuerverfahren durchgeführt wird, sobald der mindestens eine digitale Computer (FAD1, FAD2) eingeschaltet wird (E10), wobei das Steuermodul dazu in der Lage ist:
- zu überprüfen (E20), ob der Eingang (ENT1ᵢ) zu dem Sensor (CAPᵢ) gerichtet ist,
- einen Code (COD) zu überprüfen (E30), der in einer bestimmten Adresse (ADR) eines Speichers (MEM) des Systems (SYS1, SYS2) bestimmt ist,
- den Empfang mindestens eines bestimmten Rahmens innerhalb einer bestimmten Zeitspanne zu überprüfen (E40).

6. System (SYS1, SYS2) nach Anspruch 5, **dadurch gekennzeichnet, dass** das Steuermodul Mittel zum Überschreiben des Codes (COD) im Falle eines Versagens von mindestens einer der Prüfungen (E20, E30, E40) beinhaltet.

## Claims

1. A system (SYS1, SYS2) having at least one digital computer (FAD1) suitable for controlling an engine (MOD1) in an aircraft (AER), each digital computer (FAD1) comprising:
• at least one input (ENT1ᵢ) suitable for receiving data (DONᵢ) representative of the state of a sensor (CAPᵢ) ;
• at least one output (SOR1ⱼ) suitable for being connected to at least one actuator (ACTj); and
• a regulation module (MREG1) suitable for sending at least one command (COM_{i,j}) via a said output (SOR1ⱼ) to said at least one actuator (ACTⱼ) as a function of data (DONᵢ, DSUᵢ) received by at least one input (ENT1ᵢ) ;
said system (SYS) being **characterized in that** it comprises:
• a selection module (MSEL1) included in said at least one digital computer (FAD1) and suitable for switching said input (ENT1ᵢ) either to said sensor (CAPᵢ) or else to a substitution bus (BSU1) as a function of an instruction from an operator;
• a real time simulator (SIM) for simulating at least some of the environment of said engine (MOD1) and of said aircraft (AER), the simulator comprising:
• a digital output (SIO1) suitable for sending at least one substitution item of digital data (DSUᵢ) over said substitution bus (BSU) to said input (ENTᵢ) of said at least one digital computer (FAD1); and
• a digital input (SII1) connected to said at least one output (SOR1ⱼ) of the digital computer (FAD1) and suitable for receiving said at least one command (COM_{i,j}) issued by said at least one digital computer (FAD1), said real time simulator (SIM) being designed to simulate the reaction of said engine (MOD1) and of said aircraft (AER) to said command (COM_{i,j}); and
• a verification module (CTR) embedded in said at least one digital computer (FAD1), suitable for implementing a verification procedure for preventing said at least one input (ENT1ᵢ) of the digital computer (FAD1) from being switched to said substitution bus (BSU1) by said selection module (MSEL1) when said aircraft is in flight.

2. A system (SYS1, SYS2) according to claim 1, **characterized in that** said selection module (MSEL) is implemented by a software module constituting an interface between said at least one input (ENTᵢ) and said regulation module (MREG).

3. A system (SYS1, SYS2) according to claim 1 or claim 2, **characterized in that** it includes means (CTR, MD1ⱼ) for connecting or disconnecting said output (SORⱼ) that is connected to said actuator (ACTⱼ) to or from the input (SII1) of said simulator.

4. A system (SYS2) according to any one of claims 1 to 3, **characterized in that** it includes two engines (MOT1, MOT2) and two of said digital computers (FAD1, FAD2) that are mutually interconnected by a physical connection (LIF), each of said computers (FAD1, FAD2) being suitable for controlling one of said engines.

5. A system (SYS1, SYS2) according to any one of claims 1 to 4, **characterized in that** said verification procedure is implemented as soon as said at least one digital computer (FAD1, FAD2) is switched on (E10), said verification module being suitable for:
• verifying (E20) that said input (ENT1ᵢ) is switched to said sensor (CAPᵢ);
• verifying (E30) a determined code (COD) in a determined address (ADR) of a memory (MEM) of said system (SYS1, SYS2); and
• verifying (E40) that at least one determined frame is received in a determined time.

6. A system (SYS1, SYS2) according to claim 5, **characterized in that** said verification module includes means for overwriting said code (COD) in the event of at least one of said verification steps (E20, E30, E40) failing.
